# EUROPEAN PATENT SPECIFICATION

(11) **EP 3 690 678 B1**
(45) Date of publication and mention of the grant of the patent: **25.02.2026**
(21) Application number: 19874765.1
(22) Date of filing: 09.05.2019
(51) Int. Cl.: G06F 16/906

(54) **SERVICE PROCESSING METHOD AND RELATED APPARATUS**
DIENSTVERARBEITUNGSVERFAHREN UND ZUGEHÖRIGE VORRICHTUNG
PROCÉDÉ DE TRAITEMENT DE SERVICE ET APPAREIL ASSOCIÉ

(30) Priority: 21.11.2018 CN 201811392818
(43) Date of publication of application: 05.08.2020
(73) Proprietor: Huawei Technologies Co., Ltd., Shenzhen, Guangdong 518129 (CN)
(72) Inventor: JIANG, Han, Guangdong 518129 (CN); REN, Chao, Guangdong 518129 (CN); QIAN, Liangfang, Guangdong 518129 (CN)
(74) Representative: Maiwald GmbH
(86) International application number: PCT/CN2019/086127
(87) International publication number: WO 2020/103404

(56) References cited:
- EP-A1- 3 125 156
- EP-A1- 3 188 081
- CN-A- 104 268 547
- CN-A- 107 402 964
- CN-A- 107 786 732
- CN-A- 108 322 609
- US-A1- 2011 153 617
- BOLEI ZHOU ET AL: "Learning Deep Features for Scene Recognition using Places Database", ADVANCES IN NEURAL INFORMATION PROCESSING SYSTEMS 27 (NIPS 2014), 8 December 2014 (2014-12-08), pages 1 - 9, XP055328773

## Description

### TECHNICAL FIELD

This application relates to the field of artificial intelligence, and in particular, to a service processing method and a related apparatus.

### BACKGROUND

With development of science and technology, a terminal device represented by a smartphone plays an increasingly important role in people's life. The smartphone is used as an example. In daily life, the smartphone may be used to scan a picture that carries a two-dimensional code, to implement a function of a related application program or obtain information.

Currently, when the smartphone is in a screen-off state, if an action of scanning a two-dimensional code needs to be performed, a screen needs to be turned on first, and after the smartphone is unlocked, a related application program needs to be operated to complete scanning of the two-dimensional code.

However, the foregoing action of scanning, by the smartphone, the picture that carries the two-dimensional code has disadvantages, for example, operations are complex, and intelligence is low. Consequently, use convenience of a user is reduced.

EP 3 125 156 A1 describes a method for image scene determination. Wherein the method comprises: obtaining a gallery of a user terminal, the gallery comprising at least one image to be processed; identifying the at least one the image to be processed using an image scene identification model respectively, to determine a scene to which each of the at least one the image to be processed corresponds; and marking each one of the at least one the image to be processed with the scene to which it the image to be processed corresponds. It facilitates in classifying images to be processed in a gallery according to scenes they corresponds and providing the images to a user when the user is viewing the images, so as to improve users experience on usage of the gallery.

CN 104 268 547 A relates to method and device for playing music based on picture content. The method includes the steps that a target picture in a picture library and picture identification of the target picture are acquired; the image characteristics of the target picture are extracted; a scene label corresponding to the image characteristics of the target picture is judged through a pre-generated scene judgment model; scene music identification corresponding to the scene label is determined; the corresponding relationship between the picture identification and the scene music identification is established; when a command for opening the target picture corresponding to the picture identification is received, a music file corresponding to the scene music identification is played. According to the scheme, proper music can be played according to the picture content, the operation complexity of a user is lowered, and time is saved for the user.

### SUMMARY

The object of the invention is solved by the features of the independent claims. Further embodiments are the subject-matter of the dependent claims.

### BRIEF DESCRIPTION OF DRAWINGS

FIG 1a is a schematic diagram of a system architecture according to an embodiment of this application;
FIG 1b is a schematic diagram of another system architecture according to an embodiment of this application;
FIG 2 is a schematic diagram of a use scenario in a service processing method according to an embodiment of this application;
FIG 3 is a schematic diagram of an embodiment of a service processing method according to an embodiment of this application;
FIG 4 is a schematic diagram of an embodiment of intelligently starting an application program according to an embodiment of this application;
FIG 5 is a schematic diagram of an embodiment of intelligently recommending a service according to an embodiment of this application;
FIG 6 is a schematic flowchart of an application scenario of a service processing method according to an embodiment of this application;
FIG 7 is a schematic structural diagram of a computer system according to an embodiment of this application;
FIG 8 is a schematic structural diagram of an AI processor according to an embodiment of this application; and
FIG 9 is a schematic diagram of an embodiment of a service processing apparatus according to an embodiment of this application.

### DESCRIPTION OF EMBODIMENTS

This application provides a service processing method and a related apparatus. A terminal device may obtain to-be-processed data by using a sensor in the terminal device. A scene identification model in the terminal device determines a current scene based on the to-be-processed data, and determines a corresponding service processing manner based on the current scene. Because the service processing manner is a service processing manner that is preset in the terminal device, operation steps of a user can be simplified, operation intelligence can be improved, and use convenience of the user can be improved.

In the specification, claims, and accompanying drawings of this application, the terms such as "first", "second", "third", and "fourth" (if existent) are intended to distinguish between similar objects but do not necessarily describe a specific order or sequence. It should be understood that the data used in such a way is interchangeable in proper circumstances, so that the embodiments described herein can be implemented in other orders than the order illustrated or described herein. In addition, the terms "include", "have", and any other variants thereof mean to cover the non-exclusive inclusion, for example, a process, method, system, product, or device that includes a list of steps or units is not necessarily limited to those expressly listed steps or units, but may include other steps or units that are not expressly listed or are inherent to such a process, method, product, or device.

Before the embodiments are described, several concepts that may occur in the embodiments are first described. It should be understood that the following concept explanations may be limited due to a specific case in the embodiments, but it does not indicate that this application is limited to the specific case. The following concept explanations may also vary with a specific case in different embodiments.

To facilitate understanding of the embodiments of this application, several concepts that may occur in this application are first described. It should be understood that the following concept explanations may be limited due to a specific case in this application, but it does not indicate that this application is limited to the specific case. The following concept explanations may also vary with a specific case in different embodiments.

### 1. Processor

A plurality of processors (which may also be referred to as cores or computing units) are disposed on a terminal device, and these cores constitute a processor. The cores in the embodiments of this application mainly relate to heterogeneous cores, and these cores include but are not limited to the following types:
(1) Central processing unit (central processing unit, CPU): The central processing unit is a very large scale integrated circuit, and is a computing core (core) and a control core (control unit) of a computer. A function of the central processing unit is mainly to interpret a computer instruction and process data in computer software.
(2) Graphics processing unit (graphics processing unit, GPU): The graphics processing unit is also referred to as a display core, a visual processor, and a display chip, is a microprocessor that specially performs image computation on a personal computer, a workstation, a game console, and some mobile terminal devices (such as a tablet computer and a smartphone).
(3) Digital signal processor (digital signal process, DSP): The DSP is a chip that can implement a digital signal processing technology. A Harvard structure in which a program is separated from data is used inside the DSP chip. The DSP chip has a dedicated hardware multiplier, is widely operated by using a pipeline, provides a special DSP instruction, and can be used to quickly implement various digital signal processing algorithms.
(3.1) Image signal processor (image signal processor, ISP): The ISP is a chip that can implement image signal processing and calculation. The ISP is a type of DSP chip, and is mainly used to perform post-processing on data that is output by an image sensor. Main functions include linear correction, noise removal, defect pixel correction, interpolation, white balance, automatic exposure, and the like.
(3.2) Audio signal processor (audio signal processor, ASP): The ASP is a chip that can implement audio signal processing and calculation. The ASP is a type of DSP chip, is mainly used to perform post-processing on data that is output by an audio collector. Main functions include acoustic source localization, acoustic source enhancement, echo cancellation, a noise suppression technology, and the like.
(4) AI (artificial intelligence, artificial intelligence) processor

The AI processor, also referred to as an artificial intelligence processor or an AI accelerator, is a processing chip in which an artificial intelligence algorithm is run, and is usually implemented by using an application-specific integrated circuit (application specific integrated circuits, ASIC), or may be implemented by using a field-programmable gate array (field-programmable gate array, FPGA), or may be implemented by using a GPU. This is not limited herein. The AI processor uses a systolic array (systolic array) structure. In the array structure, data rhythmically flows between processing units in the array in a predetermined "pipeline" manner. In a process in which the data flows, all processing units process, in parallel, the data that flows through the processing units, so that the AI processor can reach a very high parallel processing speed.

The AI processor may be specifically a neural-network processing unit (neural-network processing unit, NPU), a tensor processing unit (tensor processing unit, TPU), an intelligence processing unit (intelligence processing unit, IPU), a GPU, or the like.

(4.1) Neural-network processing unit (neural-network processing unit, NPU): The NPU simulates human neurons and synapses at a circuit layer, directly processes a large scale of neurons and synapses by using a deep learning instruction set, where one instruction is used to complete processing of a group of neurons. Compared with a von Neumann structure in which storage and computing are separated and that is used in the CPU, the NPU implements integration of storage and computing by using a synaptic weight, thereby greatly improving running efficiency.

(4.2) Tensor processing unit (tensor processing unit, TPU): Artificial intelligence is intended to assign human intelligence to a machine, and machine learning is a powerful method for implementing artificial intelligence. Machine learning is a discipline that studies how to enable a computer to learn automatically. The TPU is a chip that is specially used for machine learning, can be a programmable artificial intelligence accelerator for a Tensorflow platform, and is essentially an accelerator with the systolic array structure. An instruction set in the TPU may also be run when a Tensorflow program is changed or an algorithm is updated. The TPU can provide low-precision computation with a high throughput, is used for forward computation of a model rather than model training, and has higher energy efficiency (TOPS/w). The TPU may also be referred to as an intelligence processing unit (intelligence processing unit, IPU).

### 2. Sensor

A plurality of sensors (sensor) are disposed on the terminal device, and the terminal device obtains external information by using these sensors. The sensors in the embodiments of this application include but are not limited to the following types:
(1) Infrared image sensor (infrared radiation-red green blue image sensor, IR-RGB image sensor): The infrared image sensor uses a CCD (charge-coupled device, charge-coupled device) unit or a standard CMOS (complementary meta-oxide semiconductor, complementary metal-oxide-semiconductor) unit, performs filtering by using a filter through which only light of a color wavelength segment and light of a specified infrared wavelength segment are allowed to pass, and performs separation in the image signal processor to obtain an IR (infrared radiation, infrared) image data flow and an RGB (red blue green, red green blue) image data flow. The IR image data flow is an image data flow obtained in a low-light environment, and the two image data flows obtained through separation are processed by another application.
(2) Acceleration sensor (acceleration sensor): The acceleration sensor is configured to measure an acceleration change value of an object, and usually performs measurement in three directions: X, Y, and Z. A value in the X direction represents horizontal direction movement of the terminal device, a value in the Y direction represents vertical direction movement of the terminal device, and a value in the Z direction represents spatial vertical direction movement of the terminal device. In an actual scenario, the acceleration sensor is configured to measure a movement speed and direction of the terminal device. For example, when a user moves by holding the terminal device, the terminal device moves up and down. In this way, the acceleration sensor can detect that an acceleration is changed in a direction back and forth, and a quantity of steps can be calculated by detecting a quantity of times the acceleration is changed back and forth.
(3) Gyroscope (gyroscope): The gyroscope is a sensor for measuring an angular velocity of an object around a center rotation axis. A gyroscope applied to the terminal device is a micro-electro-mechanical systems gyroscope (micro-electro-mechanical-systems gyroscope, MEMS gyroscope) chip. A common MEMS gyroscope chip is a three-axis gyroscope chip, and can trace displacement changes in six directions. The three-axis gyroscope chip may obtain change values of angular accelerations of the terminal device in the x, y, and z directions, and is configured to detect a rotation direction of the terminal device.
(4) Ambient light sensor (ambient light sensor): The ambient light sensor is a sensor that measures a change of external light, and measures a change of external light intensity based on a photo-electric effect. The ambient light sensor is applied to the terminal device, and is configured to adjust brightness of a display screen of the terminal device. However, because the display screen is usually a most power-consuming part of the terminal device, the ambient light sensor is configured to assist in adjusting screen brightness, thereby further extending a battery life.
(5) Proximity sensor (proximity sensor): The proximity sensor includes an infrared emitting lamp and an infrared radiation ray detector. The proximity sensor is located near a handset of the terminal device. When the terminal device is close to the ear, a system learns, by using the proximity sensor, that the user is on a call, and then turns off the display screen, to prevent the user from affecting the call due to a misoperation. A working principle of the proximity sensor is as follows: Invisible infrared light emitted by the infrared emitting lamp is reflected by a nearby object, and then is detected by the infrared radiation ray detector. Generally, a near infrared spectrum band is used for the emitted visible infrared light.
(6) Geomagnetic sensor (magnetism sensor): The geomagnetic sensor is a measurement apparatus that may indicate, by using different motion states of a measured object in a geomagnetic field because magnetic flux distribution in different directions of the geomagnetic field is different, information such as a gesture and a motion angle of the measured object by sensing a distribution change in the geomagnetic field. The geomagnetic sensor is usually used in a compass or navigation application of the terminal device, and helps the user implement accurate positioning by calculating a specific orientation of the terminal device in three-dimensional space.

3. Scene identification: Scene identification is also referred to as context awareness (context awareness), is originated from study of so-called pervasive computing, and was first proposed by Schilit in 1994. Context awareness has many definitions, and briefly means enabling a computer device to be "aware" of a current scene by using a sensor and a related technology of the sensor. There are also many pieces of information that can be used to perform context awareness, such as a temperature, a location, an acceleration, audio, and a video.

To make persons skilled in the art understand the solutions in this application better, the following describes the embodiments of this application with reference to the accompanying drawings in the embodiments of this application.

The service processing method provided in the embodiments of this application may be applied to a terminal device. The terminal device may be a mobile phone, a tablet computer (tablet personal computer), a laptop computer (laptop computer), a digital camera, a personal digital assistant (personal digital assistant, PDA for short), a navigation apparatus, a mobile internet device (mobile internet device, MID), a wearable device (wearable device), a smartwatch, a smart band, or the like. Certainly, in the following embodiments, a specific form of the terminal device is not limited. A system that can be installed on the terminal device may include iOS^{®}, Android^{®}, Microsoft^{®}, Linux^{®}, or another operating system. This is not limited in the embodiments of this application.

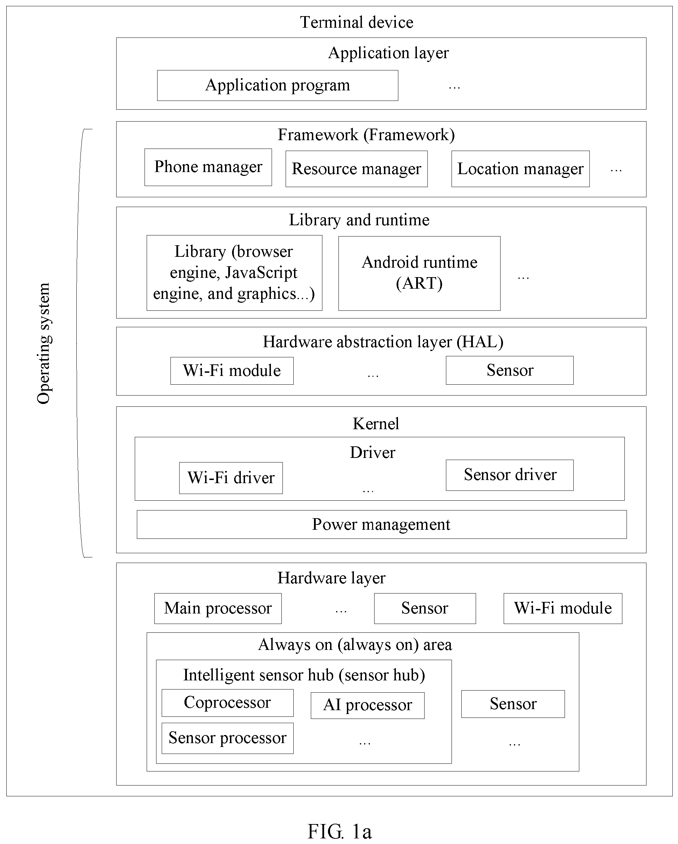

A terminal device on which an Android^{®} operating system is installed is used as an example. FIG 1a is a schematic diagram of a system architecture according to an embodiment of this application. The terminal device may be logically divided into a hardware layer, an operating system, and an application layer. The hardware layer includes hardware resources such as a main processor, a microcontroller unit, a modem, a Wi-Fi module, a sensor, and a positioning module. The application layer includes one or more application programs. For example, the application program may be any type of application program such as a social-type application, an e-commerce-type application, a browser, a multimedia-type application, and a navigation application, or may be an application program such as a scene identification model and an artificial intelligence algorithm. The operating system serves as a software middleware between the hardware layer and the application layer, and is an application program that manages and controls hardware and software resources.

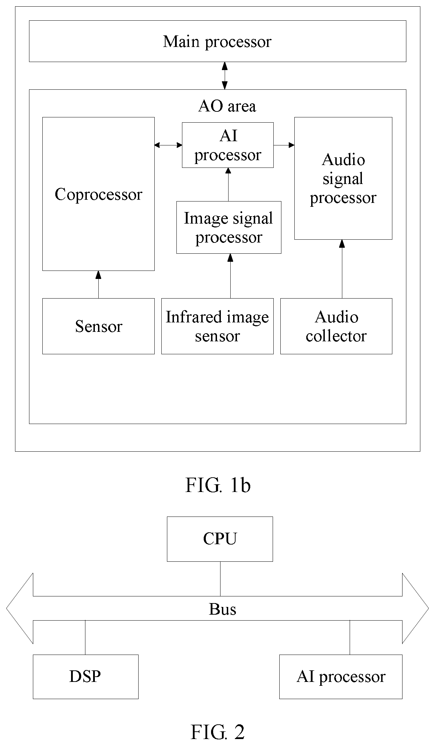

In addition to the hardware resources such as the main processor, the sensor, and the Wi-Fi module, the hardware layer further includes an always on (always on, AO) area. Hardware in the always on area is usually started all day. The always on area further includes hardware resources such as a sensor control center (sensor hub), an AI processor, and a sensor. The sensor hub includes a coprocessor and a sensor processor. The sensor processor is configured to process data that is output by the sensor. After data generated by the AI processor and the sensor processor is further processed by the coprocessor, the coprocessor establishes an interaction relationship with the main processor. The sensor in the always on area includes an infrared image sensor, a gyroscope, an acceleration sensor, an audio collector (mic), and the like. The sensor processor includes a mini image signal processor (mini ISP) and an audio signal processor (ASP). For ease of understanding, a connection relationship between the AO area and the hardware layer is shown in FIG 1b. FIG 1b is a schematic diagram of another system architecture according to an embodiment of this application.

In an embodiment, the operating system includes a kernel, a hardware abstraction layer (hardware abstraction layer, HAL), a library and runtime (libraries and runtime), and a framework (framework). The kernel is configured to provide an underlying system component and service, for example, power management, memory management, thread management, and a hardware driver. The hardware driver includes a Wi-Fi driver, a sensor driver, a positioning module driver, and the like. The hardware abstraction layer is encapsulation of a kernel driver, provides an interface for the framework, and shields an underlying implementation detail. The hardware abstraction layer is run in user space, and the kernel driver is run in kernel space.

The library and runtime is also referred to as a runtime library, and provides a library file and an execution environment that are required by an executable program in a runtime. The library and runtime includes an Android runtime (android runtime, ART), a library, and the like. The ART is a virtual machine or a virtual machine instance that can convert bytecode of an application program into machine code. The library is a program library that provides support for the executable program in the runtime, and includes a browser engine (such as a webkit), a script execution engine (such as a JavaScript engine), a graphics processing engine, and the like.

The framework is configured to provide various basic common components and services for the application program in the application layer, for example, window management and location management. The framework may include a phone manager, a resource manager, a location manager, and the like.

Functions that are of the components of the operating system and that are described above may be implemented by the main processor by executing a program stored in a memory.

Persons skilled in the art may understand that the terminal may include fewer or more components than those shown in each of FIG. 1a and FIG 1b, and the terminal device shown in each of FIG 1a and FIG 1b includes only components more related to a plurality of implementations disclosed in the embodiments of this application.

FIG 2 is a schematic diagram of a use scenario in a service processing method according to an embodiment of this application. In the use scenario, a processor is disposed on the terminal device, and the processor includes at least two cores. The at least two cores may include a CPU, an AI processor, and the like. The AI processor includes but is not limited to a neural-network processing unit, a tensor processing unit, a GPU, and the like. These chips may be referred to as cores, and are configured to perform computation on the terminal device. Different cores have different energy efficiency ratios.

The terminal device may execute different application services by using a specific algorithm. The method in this embodiment of this application relates to running a scene identification model. The terminal device may determine, by using the scene identification model, a target scene in which a user currently using the terminal device is located, and execute different service processing manners based on the determined target scene.

When determining the target scene in which the user currently using the terminal device is located, the terminal device determines different target scenes based on data collected by different sensors and an AI algorithm in the scene identification model.

Therefore, the embodiments of this application provide a service processing method. The following embodiments of this application mainly describes a case in which the terminal device determines, based on the data collected by different sensors and the scene identification model, a target scene in which the terminal device is located and a service processing manner corresponding to the target scene.

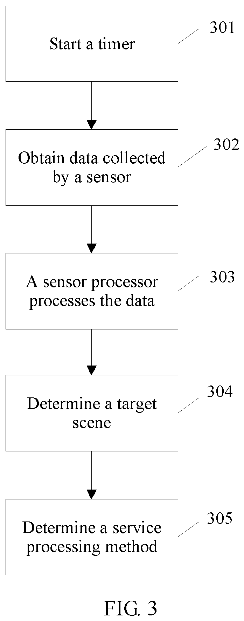

The following further describes the technical solutions in this application by using an embodiment. FIG 3 is a schematic diagram of an embodiment of a service processing method according to an embodiment of this application. The embodiment of the service processing method according to this embodiment of this application includes the following steps.

301. Start a timer.

In this embodiment, a terminal device starts a timer connected to a sensor, and the timer is used to indicate a time interval for collecting data by the sensor connected to the timer. A coprocessor in an AO area sets, based on a requirement of the scene identification model, timing time periods of timers corresponding to different sensors. For example, a timing time period of a timer corresponding to an acceleration sensor may be set to 100 milliseconds (millisecond, ms). This means that acceleration data is collected at an interval of 100 ms, and the acceleration data is stored in a buffer area specified in the terminal device.

The timing time period herein may be set based on the requirement of the scene identification model, or may be set based on a plurality of requirements such as a sensor lifetime, buffer space usage, and power consumption. For example, for an infrared image sensor, the infrared image sensor may collect an infrared image at a relatively high frame frequency, but continuous collection for a long time period causes damage to the sensor and affects a lifetime. In addition, continuous collection for a long time period causes an increase in power consumption of the infrared image sensor, and reduces use duration of the terminal device. Based on the foregoing case and an actual requirement of the scene identification model, a timing time period of a timer connected to the infrared image sensor may be set to the following value, for example, in a face recognition scenario, a timing time period of image collection may be set to 1/6 second, that is, 10 frames of images are collected per second; or in another identification scenario, a timing time period of image collection may be set to 1 second, that is, one frame of image is collected per second. Alternatively, when the terminal device is in a low-power mode, the timing time period may be set to 1 second, to extend use duration of the terminal device. For some sensors that have low power consumption and whose collected data occupies relatively small storage space, a timing time period of the sensor may not be set, to collect data in real time.

It should be noted that the timer may be a chip that is connected to the sensor and that has a timing function, or may be a built-in timing function of the sensor. This is not limited herein.

302. The sensor collects data.

In this embodiment, after the timing time period of the timer expires, the sensor connected to the timer is instructed to be started and collect data. A specific sensor that needs to be used to collect data is selected by the coprocessor based on the scene identification model. For example, when the terminal device needs to determine whether the terminal device is currently in a two-dimensional code scanning scene, the terminal device collects data by using the infrared image sensor. After processing and calculating the data collected by the infrared image sensor, the terminal device can complete a scene identification process. When the terminal device needs to determine whether the terminal device is currently in a conference scene, in addition to collecting data by using the infrared image sensor, the terminal device further needs to collect data by using an audio collector. After processing and calculating the data collected by the infrared image sensor and the data collected by the audio collector, the terminal device can complete a scene identification process.

The infrared image sensor is used as an example. After the timing time period corresponding to the infrared image sensor expires, the infrared image sensor collects image data. The image data includes an IR image and an RGB image. The IR image is a grayscale image, and may be used to display external information photographed in a low-light environment. The RGB image is a color image, and may be used to display external information photographed in a non-low-light environment. The infrared image sensor stores the collected image data into buffer space for use in a subsequent step.

There are two different application scenarios for obtaining the image data collected by the infrared image sensor. A first application scenario is that a first infrared image sensor is disposed in a housing that is in the terminal device and that is in a same plane as a home screen of the terminal device. A second application scenario is that a second infrared image sensor is disposed in a housing that is in the terminal device and that is in a same plane as a primary image sensor in the terminal device. The following separately describes the two cases.

In the first application scenario, the first infrared image sensor may collect image data projected to the home screen of the terminal device. For example, when a user performs an operation of taking a self-portrait by using the terminal device, the first infrared image sensor disposed in the same plane as the home screen of the terminal device may collect face image data of the user.

In the second application scenario, the second infrared image sensor may collect image data projected to the primary image sensor in the terminal device. For example, when a user performs an operation of scanning a two-dimensional code by using the primary image sensor in the terminal device, the second infrared image sensor disposed in the same plane as the primary image sensor in the terminal device may collect two-dimensional code image data.

It should be noted that, both the first infrared image sensor and the second infrared sensor may be disposed in a same terminal device. A disposition manner and a data collection manner are similar to the foregoing manners, and details are not described herein again.

The audio collector may be disposed at any location on the housing of the terminal device, and usually collects, at a sampling frequency of 16 kilohertz, audio data in an environment in which the terminal device is located.

The acceleration sensor is disposed in the always on area inside the terminal device, is connected to a sensor hub by using an inter-integrated circuit (inter-integrated circuit, I2C) or a serial peripheral interface (serial peripheral interface, SPI) SPI, and usually provides an acceleration measurement range from ±2 gravity (gravity, G) to ±16 gravity (gravity, G), where precision of collected acceleration data is less than 16 bits (bit).

It should be noted that the data collected by the sensor may be directly sent to a sensor processor or the scene identification model for processing, or may be stored in the buffer area, where the sensor processor or the scene identification model reads the sensor data in the buffer area for processing. This is not limited herein.

303. The sensor processor processes the data.

In this embodiment, after the sensor collects the data, the sensor processor corresponding to the sensor, also referred to as a digital signal processor corresponding to the sensor, may perform data preprocessing on the collected data to generate to-be-processed data for subsequent use in the scene identification model.

A sensor processor miniISP corresponding to the infrared image sensor is used as an example. After obtaining the image data collected by the infrared image sensor, the miniISP processes the image data. For example, when resolution (image resolution) of the image data collected by the sensor is 640 pixels × 480 pixels, the miniISP may perform compression processing on the image data to generate to-be-processed image data of 320 pixels × 240 pixels. The miniISP may further perform automatic exposure (automatic exposure, AE) processing on the image data. In addition to the foregoing processing manners, the miniISP may be further configured to automatically select, based on brightness information included in the image data, an image that needs to be processed in the image data. For example, when the miniISP determines that a current image is collected in the low-light environment, because the IR image includes more image detail information in the low-light environment than the RGB image, the miniISP selects the IR image in the image data for processing.

It may be understood that, not all sensor data needs to be processed by the sensor processor, for example, the acceleration data collected by the acceleration sensor may be directly used in the scene identification model. Step 303 is an optional step.

304. Determine a target scene.

In this embodiment, the terminal device determines a corresponding target scene based on the scene identification model by using the data collected by the sensor and/or the to-be-processed data obtained through processing performed by the sensor processor. The scene identification model is run on the coprocessor and an AI processor, and an AI algorithm in the scene identification model is run on the AI processor. For data collected by different sensors, a direction and a sequence in which the data flows in the scene identification model are different. For example, the to-be-processed image data generated by the miniISP through processing based on the image data and to-be-processed audio data generated by an ASP based on the audio data are first loaded to the AI algorithm that is in the scene identification model and that is run on the AI processor, and then the coprocessor determines the target scene based on a calculation result of the AI processor. The acceleration data generated by the acceleration sensor through collection is first processed by the coprocessor, and then is loaded to the AI algorithm that is in the scene identification model and that is run on the AI processor. Finally, the coprocessor determines the target scene based on a calculation result of the AI processor.

The scene identification model includes two parts. A first part is the AI algorithm. The AI algorithm includes a data set obtained by the sensor through collection and a to-be-processed data set obtained by the sensor processor through processing. A neural network model is obtained through offline training. The second part is to determine the target scene based on a calculation result of the AI algorithm, and this is completed by the coprocessor. For the image data, a convolutional neural network (convolutional neural network, CNN) is usually used. For the audio data, a deep neural network (deep neural network, DNN)/recurrent neural network (recurrent neural network, RNN)/long short-term memory (long short-term memory, LSTM) network is usually used. Different deep neural network algorithms may be used for different data, and a specific algorithm type is not limited.

The CNN is a feedforward neural network whose artificial neuron can respond to a surrounding unit in a partial coverage range, and performs well in terms of large-scale image processing. The CNN includes one or more convolutional layers and a fully connected layer (corresponding to a classical neural network) at the top, and also includes a correlation weight and a pooling layer (pooling layer). This structure enables the CNN to use a two-dimensional structure of input data. A convolutional kernel of the convolutional layer in the CNN convolves images. Convolution is scanning an image by using a filter of a specific parameter, and extracting a feature value of the image.

Offline training means performing model design and training in a deep learning framework such as Tensorflow or Caffe (convolutional architecture for fast feature embedding).

The infrared image sensor is used as an example. In the terminal device, there are a plurality of scene identification models to which infrared image data may be applied, for example, a two-dimensional code scanning scene identification model, a code scanned scene identification model, and a self-portrait scene identification model. One or more scene identification models may be applied to the terminal device. Descriptions are separately provided below.

In the two-dimensional code scanning scene identification model, a neural network model that is loaded on the AI processor and that is obtained through offline training collects 100,000 two-dimensional code images and 100,000 non-two-dimensional code images by using a CNN algorithm and the sensor, and separately marks the images (with a two-dimensional code or without a two-dimensional code). After training is performed on the Tensorflow, the neural network model and a related parameter are obtained. Then, image data collected by the second infrared image sensor is input into the neural network model for network derivation, so that a result of whether the image includes a two-dimensional code can be obtained. It should be noted that, in the two-dimensional code scanning scene identification model, during offline training, if a collected image may alternatively be another icon such as a bar code image in addition to a two-dimensional image, the two-dimensional code scanning scene identification model may be further used to identify a result of whether an image obtained by the terminal device includes a bar code and the like.

In the code scanned scene identification model, a neural network model that is loaded on the AI processor and that is obtained through offline training collects, by using a CNN algorithm and the sensor, 100,000 images including a code scanning device and 100,000 images not including a code scanning device. The image including the code scanning device is image data that is collected by the sensor and that includes a scanning part in a wearable device such as a scanner, a scanning gun, a smartphone, or a smart band. The smartphone is used as an example. When the image includes a primary image sensor in the smartphone, the image is an image including a code scanning device. The neural network model separately marks the images (with a code scanning device or without a code scanning device). After training is performed on the Tensorflow, the neural network model and a related parameter are obtained. Then, image data collected by the first infrared image sensor is input into the neural network model for network derivation, so that a result of whether the image includes a code scanning device can be obtained.

In the self-portrait scene identification model, a neural network model that is loaded on the AI processor and that is obtained through offline training collects, by using a CNN algorithm and the sensor, 100,000 images including a human face and 100,000 images not including a human face. The image including a human face is an image including a part or all of a human face. The neural network model separately marks the images (with a human face or without a human face). After training is performed on the Tensorflow, the neural network model and a related parameter are obtained. Then, image data collected by the first infrared image sensor is input into the neural network model for network derivation, so that a result of whether the image includes a human face can be obtained.

It should be noted that, in addition to determining the target scene by using the image data collected by the infrared image sensor, the terminal device may further determine the target scene by using data collected by a plurality of sensors, for example, the audio data collected by the audio collector and the acceleration data collected by the acceleration sensor. For example, the image data, the audio data, and the acceleration data may be used to determine whether a scene in which the terminal device is currently located is a motion scene; or a plurality of types of data are used to determine whether a scene in which the terminal device is currently located is a driving scene.

A specific used algorithm, a deep learning platform used in offline training, and a quantity of data samples collected by the sensor during offline training are not specifically limited.

305. Determine a service processing method.

In this embodiment, after the coprocessor determines the target scene, the coprocessor may determine a service processing method corresponding to the target scene, or the coprocessor may send the determined target scene to a main processor, and the main processor determines a service processing method corresponding to the target scene.

According to different scenes, there are a plurality of different corresponding service processing methods. For example, if the target scene is the driving scene, the terminal device determines, based on the driving scene, that the service processing manner is to enable a driving mode of the terminal device, and/or enable a driving mode function of an application program in the terminal device, and/or display a driving mode icon in an always on display area on a standby screen of the terminal device. The driving mode of the terminal includes a navigation function and a voice assistant, and the driving mode icon is used to enable the driving mode. Enabling the driving mode of the terminal device and enabling the driving mode function of the application program in the terminal device are steps performed by the main processor. Displaying the driving mode icon in the always on display area on the standby screen of the terminal device is a step performed by the coprocessor.

In this embodiment of this application, the service processing method is provided. The terminal device collects external multidimensional information by using a plurality of sensors such as a conventional sensor, the infrared image sensor, and the audio collector, thereby improving an awareness capability of the terminal device. Because the AI processor is a dedicated chip optimized for the AI algorithm, the terminal device may greatly improve a running speed of the AI algorithm by using the AI processor, and reduce power consumption of the terminal device. Because the coprocessor runs in the always on area of the terminal device, and can work without starting the main processor, the terminal device can still perform scene identification in a screen-off state.

Next, on the basis of the embodiment corresponding to FIG 3, the following is separately described: The terminal device determines, in different scenarios, a target scene in which the terminal device is located and a service processing manner corresponding to the target scene.

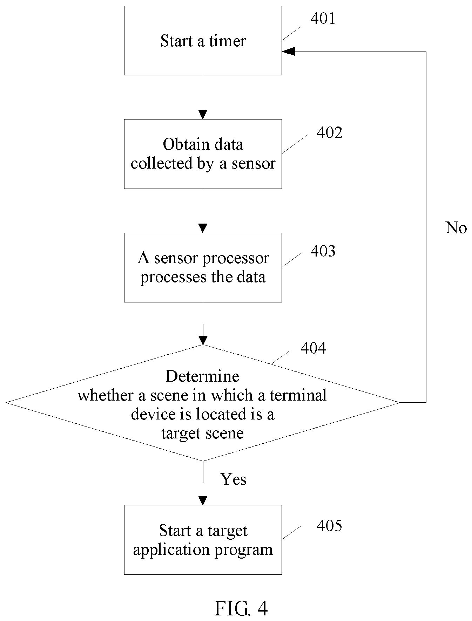

On the basis of the embodiment corresponding to FIG 3, FIG 4 is a schematic diagram of an embodiment of intelligently starting an application program according to an embodiment of this application. The embodiment of intelligently starting the application program according to this embodiment of this application includes the following steps:
401. Start a timer.

In this embodiment, step 401 is similar to step 301 in FIG 3, and details are not described herein again.

402. Obtain data collected by a sensor.

In this embodiment, step 402 is similar to step 302 in FIG 3, and details are not described herein again.

403. A sensor processor processes the data.

In this embodiment, step 403 is similar to step 303 in FIG 3, and details are not described herein again.

404. Determine whether a scene in which a terminal device is located is a target scene.

In this embodiment, a method for determining, based on the data collected by the sensor, whether the scene in which the terminal device is located is a target scene is similar to the method in step 304 in FIG. 3, and details are not described herein again.

If the terminal device determines, based on currently obtained data, that the scene in which the terminal device is located is a target scene, the terminal device proceeds to step 405. If the terminal device determines, based on currently obtained data, that the scene in which the terminal device is located is not a target scene, the terminal device proceeds to step 401, and waits to obtain and process data collected by the sensor next time.

405. Start a target application program.

In this embodiment, after the terminal device determines, based on the data collected by the sensor, the target scene in which the terminal device is currently located, the terminal device may start a target application program corresponding to the target scene.

For example, after the terminal device determines that the current scene is a motion scene, the terminal device may start a navigation application program such as Amap, or may start a health monitoring application program to monitor physiological data of a user of the terminal device, or may start a music play application program and play music automatically.

An infrared image sensor is used as an example that corresponds to three scene identification models to which infrared image data can be applied in step 404. Descriptions are separately provided below.

When the terminal device learns, based on a calculation result, that a current image includes a code scanning device, the terminal device may determine that the terminal device is currently located in a two-dimensional code scanning scene. In this case, the terminal device may automatically start an application program associated with a primary image sensor, start the primary image sensor, and turn on a home screen, for example, a camera application program. Alternatively, the terminal device starts an application program that has a two-dimensional code scanning function, and further enables the two-dimensional code scanning function in the application program. For example, the terminal device enables a "scan" function in a browser application program, where the "scan" function is used to scan a two-dimensional code image, and provide data, obtained through scanning, for a browser for use.

When the terminal device learns, based on a calculation result, that a current image includes a code scanning device, the terminal device may determine that the terminal device is currently located in a code scanned scene. In this case, the terminal device may start an application program having a two-dimensional code and/or a bar code, and after automatically turning on a home screen of the terminal device, display the two-dimensional code and/or the bar code of the application program on the home screen. For example, when determining that the current image includes a code scanning device, the terminal device turns on the home screen of the terminal device, and displays a payment two-dimensional code and/or bar code of a payment application program, where the payment application program may be Alipay or WeChat.

When the terminal device learns, based on a calculation result, that a current image includes a human face, the terminal device may determine that the terminal device is currently located in a self-portrait scene. In this case, the terminal device may start a secondary image sensor in a same plane as a home screen, and automatically start an application program associated with the secondary image sensor, for example, enable a self-portrait function in a camera application program, turn on the home screen, and display a self-portrait function interface in the camera application program on the home screen.

In this embodiment of this application, the terminal device may automatically identify the current scene on the basis of using the infrared image sensor, and intelligently start, based on the identified scene, the application program corresponding to the target scene, thereby improving operation convenience of the user.

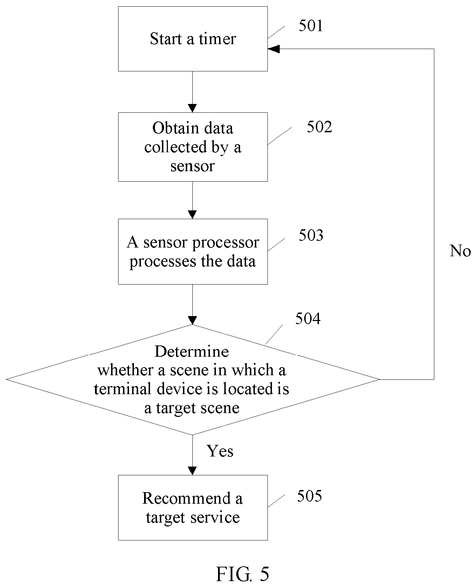

On the basis of the embodiment corresponding to FIG 3, FIG 5 is a schematic diagram of an embodiment of intelligently recommending a service according to an embodiment of this application. The embodiment of intelligently recommending the service according to this embodiment of this application includes the following steps:
501. Start a timer.

In this embodiment, step 501 is similar to step 301 in FIG 3, and details are not described herein again.

502. Obtain data collected by a sensor.

In this embodiment, step 502 is similar to step 302 in FIG 3, and details are not described herein again.

503. A sensor processor processes the data.

In this embodiment, step 503 is similar to step 303 in FIG 3, and details are not described herein again.

504. Determine whether a scene in which a terminal device is located is a target scene.

In this embodiment, a method for determining, based on the data collected by the sensor, whether the scene in which the terminal device is located is a target scene is similar to the method in step 304 in FIG. 3, and details are not described herein again.

If the terminal device determines, based on currently obtained data, that the scene in which the terminal device is located is a target scene, the terminal device proceeds to step 505. If the terminal device determines, based on currently obtained data, that the scene in which the terminal device is located is not a target scene, the terminal device proceeds to step 501, and waits to obtain and process data collected by the sensor next time.

505. Recommend a target service.

In this embodiment, after the terminal device determines, based on the data collected by the sensor, the target scene in which the terminal device is currently located, the terminal device may recommend a target service corresponding to the target scene. The following describes a specific method for recommending the target service.

After determining the target scene in which the terminal device is located, the terminal device may recommend, to a user of the terminal device, the target service corresponding to the target scene, for example, display a function entry of the target service in an always on display (always on display, AOD) area of the terminal device, display a program entry of an application program included in the target service in the AOD area of the terminal device, automatically enable the target service, and automatically start the application program included in the target service.

For example, when the terminal device determines, based on data collected by a sensor set such as an infrared image sensor, an audio collector, and an acceleration sensor, that a current scene is a scene in which an environment in which the terminal device is located is relatively quiet, such as a conference scene or a sleep scene, the terminal device may display a silent icon in the AOD area. The terminal device may enable a silent function by receiving an operation instruction of the user for the silent icon. The silent function is to set volume of all application programs in the terminal device to 0. In addition to displaying the silent icon in the AOD area, the terminal device may further display a vibration icon in the AOD area. The terminal device may enable a vibration function by receiving an operation instruction of the user for the vibration icon. The vibration function is to set the volume of all the application programs in the terminal device to 0, and set alert sound of all the application programs in the terminal device to a vibration mode. When the terminal device fails to receive an operation instruction of a corresponding icon in the AOD area within a time period such as 15 minutes, the terminal device may automatically enable the silent function or the vibration function.

When the terminal device determines that a current scene is a motion scene, the terminal device may display a music play application program icon in the AOD area. The terminal device may start a music play application program by receiving an operation instruction of the user for the music play application program icon.

The terminal device may recommend a service in a low-power state such as a screen-off state, and may use a plurality of types of sensor data such as image data, audio data, and acceleration data as context awareness data to improve accuracy of context awareness by using a deep learning algorithm, thereby improving operation convenience of the user.

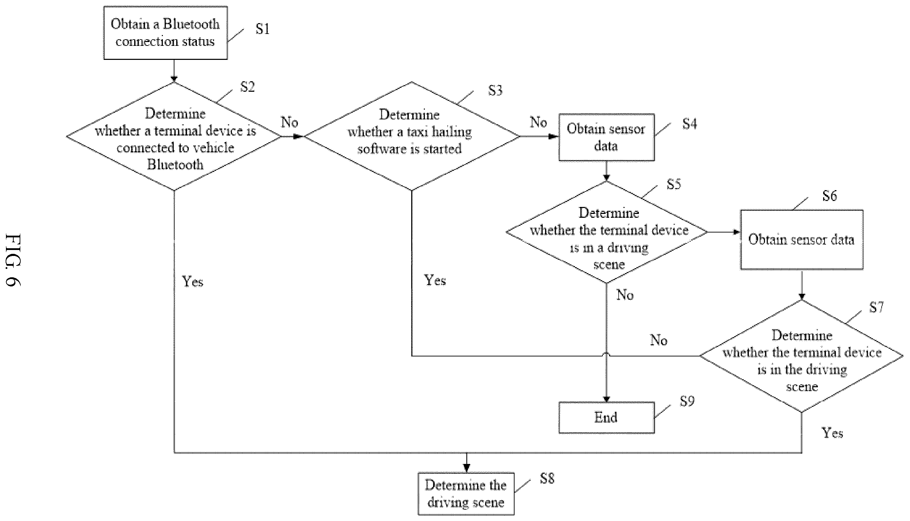

On the basis of the embodiments corresponding to FIG 3, FIG 4, and FIG 5, FIG 6 is a schematic flowchart of an application scenario of a service processing method according to an embodiment of this application. The application scenario of the service processing method according to this embodiment of this application includes the following steps.

Step S1. When a terminal device is connected to a peer device through Bluetooth, a user may indicate, by using a mark, whether the peer device currently connected to the terminal device through Bluetooth is a vehicle. After the peer device is marked as a vehicle, each time the terminal device is connected to the peer device through Bluetooth, the terminal device may determine that the peer device currently connected to the terminal device through Bluetooth is a vehicle.

A coprocessor in an AO area of the terminal device obtains a Bluetooth connection status of the terminal device at an interval of a time period that is usually 10 seconds.

Step S2. Determine whether the terminal device is connected to vehicle Bluetooth.

After obtaining a current Bluetooth connection status, the terminal device may learn whether the terminal device currently has a peer device connected to the terminal device through Bluetooth. If the terminal device currently has a peer device connected to the terminal device through Bluetooth, the terminal device further determines whether the peer device currently connected to the terminal device through Bluetooth has a vehicle identifier that is set by the user. If the peer device has the vehicle identifier that is set by the user, the terminal device may determine that the terminal device is currently connected to the vehicle Bluetooth, and proceeds to step S8. If the terminal device is currently in a state in which Bluetooth is not connected or the peer device connected to the terminal device through Bluetooth does not have the vehicle identifier that is set by the user, the terminal device proceeds to step S3.

Step S3. The terminal device obtains data related to taxi hailing software running on the terminal device, and determines, based on the data related to the taxi hailing software, whether the taxi hailing software is currently started, that is, whether the user currently uses the taxi hailing software. If determining, based on the data related to the taxi hailing software, that the user currently uses the taxi hailing software, the terminal device proceeds to step S9. If determining, based on the data related to the taxi hailing software, that the user currently does not use the taxi hailing software, the terminal device proceeds to step S4.

Step S4. The terminal device collects acceleration data and angular velocity data by using an acceleration sensor and a gyroscope, and performs data preprocessing on the collected acceleration data and the collected angular velocity data, where data preprocessing includes: performing data resampling, for example, a sampling rate of original acceleration data collected by the acceleration sensor is 100 hertz (hz), and a sampling rate of acceleration data obtained after data resampling is 1 hertz. A specific sampling rate of data obtained after resampling depends on a sampling rate of samples in a neural network model applied to a scene identification model, and is generally consistent with the sampling rate of the samples.

The terminal device stores the preprocessed data into a random access memory (random access memory, RAM) of the terminal device. The RAM includes a double data rate synchronous dynamic random access memory (double data rate, DDR), a DDR2, a DDR3, a DDR4, and a DDR5 to be launched in the future.

Step S5. The scene identification model in the terminal device obtains the preprocessed acceleration data and the preprocessed angular velocity data that are stored in the RAM, and the scene identification model determines, based on the pre-processed acceleration data and the preprocessed angular velocity data, whether the terminal device is currently in a driving scene; and if yes, the terminal device proceeds to step S6; or if no, the terminal device proceeds to step S9.

Step S6. After the terminal device determines, based on the acceleration data and the angular velocity data, that the terminal device is currently in the driving scene, because reliability of a result of scene identification performed based on the acceleration data and the angular velocity data is not high, the terminal device further needs to obtain other sensor data to perform scene identification. The terminal device obtains image data collected by an infrared image sensor and audio data collected by an audio collector, and stores the collected image data and the collected audio data into the RAM of the terminal device, or after a miniISP and an ASP correspondingly process the collected image data and the collected audio data, stores the processed image data and the processed audio data into the RAM of the terminal device.

Step S7. The terminal device obtains the image data and the audio data in the RAM, loads the image data and the audio data to the scene identification model for scene identification, and determines, based on the image data and the audio data, whether the terminal device is currently in the driving scene; and if yes, the terminal device proceeds to step S8; or if no, the terminal device proceeds to step S9.

Step S8. The terminal device displays a driving scene icon in an AOD area, where the driving scene icon is a driving scene function entry of the terminal device. After the terminal device receives an operation instruction triggered by the user by using the driving scene icon, the terminal device enables a driving scene mode, for example, starts a navigation application program, enlarges a size of a character displayed on the terminal device, and starts a voice operation assistant. The voice operation assistant may control an operation of the terminal device based on a voice instruction of the user, for example, perform an operation of dialing a phone number based on the voice instruction of the user.

Step S9. The terminal device ends a driving scene identification operation.

In this solution, the terminal device determines, by using many sensors in the terminal device, data in various dimensions such as the acceleration data, the angular velocity data, the image data, and the audio data, and an artificial intelligence algorithm, whether a current scene is the driving scene, thereby improving accuracy of driving scene identification.

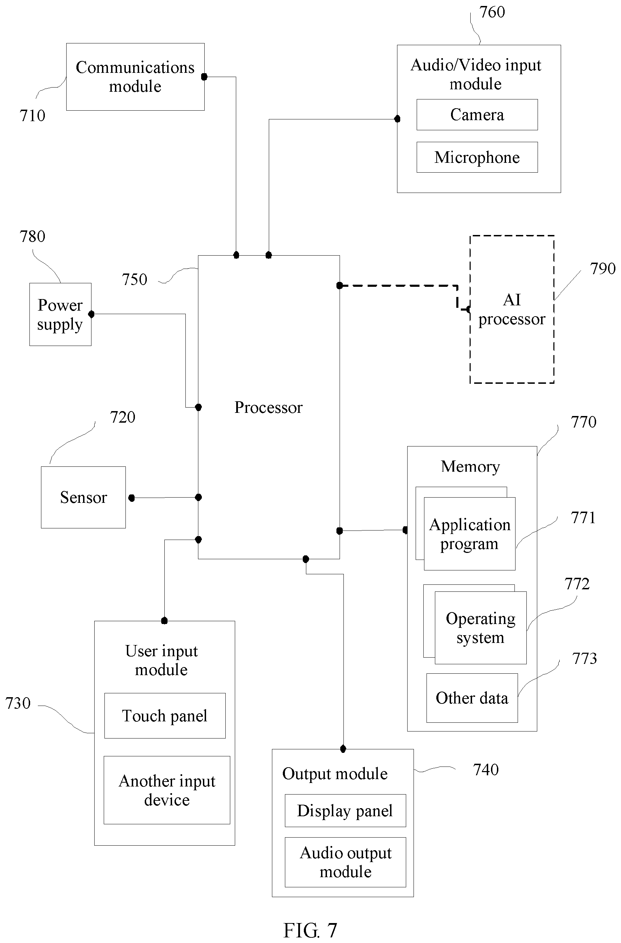

FIG 7 is a schematic structural diagram of a computer system according to an embodiment of this application. The computer system may be a terminal device. As shown in the figure, the computer system includes a communications module 710, a sensor 720, a user input module 730, an output module 740, a processor 750, an audio/video input module 760, a memory 770, and a power supply 780. Further, the computer system provided in this embodiment may further include an AI processor 790.

The communications module 710 may include at least one module that can enable the computer system to communicate with a communications system or another computer system. For example, the communications module 710 may include one or more of a wired network interface, a broadcast receiving module, a mobile communications module, a wireless internet module, a local area communications module, and a location (or positioning) information module. The plurality of modules each have a plurality of implementations in the prior art, and details are not described one by one in this application.

The sensor 720 can sense a current state of the system, for example, an on/off state, a location, whether the system is in contact with a user, a direction, and acceleration/deceleration. In addition, the sensor 720 can generate a sensing signal used to control an operation of the system. The sensor 720 includes one or more of an infrared image sensor, an audio collector, an acceleration sensor, a gyroscope, an ambient light sensor, a proximity sensor, and a geomagnetic sensor.

The user input module 730 is configured to: receive entered digit information, character information, or a contact touch operation/contactless gesture, and receive signal input and the like related to user settings and function control of the system. The user input module 730 includes a touch panel and/or another input device.

The output module 740 includes a display panel, configured to display information entered by the user, information provided for the user, various menu interfaces of the system, or the like. Optionally, the display panel may be configured in a form of a liquid crystal display (liquid crystal display, LCD), an organic light-emitting diode (organic light-emitting diode, OLED), or the like. In some other embodiments, the touch panel may cover the display panel, to form a touch display screen. In addition, the output module 740 may further include an audio output module, an alarm, a tactile module, and the like.

The audio/video input module 760 is configured to input an audio signal or a video signal. The audio/video input module 760 may include a camera and a microphone.

The power supply 780 may receive external power and internal power under the control of the processor 750, and provide power required by operations of various components of the system.

The processor 750 includes one or more processors, and the processor 750 is a main processor in the computer system. For example, the processor 750 may include a central processing unit and a graphics processing unit. In this application, the central processing unit has a plurality of cores, and is a multi-core processor. The plurality of cores may be integrated into one chip, or each may be an independent chip.

The memory 770 stores a computer program, and the computer program includes an operating system program 772, an application program 771, and the like. A typical operating system includes a system used in a desktop computer or a notebook computer, such as Windows of Microsoft or MacOS of Apple, and also includes a system used in a mobile terminal, such as a Linux^{®}-based Android (Android^{®}) system developed by Google. The methods provided in the foregoing embodiments may be implemented by software, and may be considered as specific implementation of the operating system program 772.

The memory 770 may be one or more of the following types: a flash (flash) memory, a memory of a hard disk type, a memory of a micro multimedia card type, a memory of a card type (for example, an SD memory or an XD memory), a random access memory (random access memory, RAM), a static random access memory (static RAM, SRAM), a read-only memory (read only memory, ROM), an electrically erasable programmable read-only memory (electrically erasable programmable read-only memory, EEPROM), a programmable read-only memory (programmable ROM, PROM), a replay protected memory block (replay protected memory block, RPMB) a magnetic memory, a magnetic disk, or an optical disc. In some other embodiments, the memory 770 may be a network storage device in the Internet. The system may perform an update operation, a read operation, or another operation on the memory 770 in the Internet.

The processor 750 is configured to: read the computer program in the memory 770, and then perform a method defined by the computer program. For example, the processor 750 reads the operating system program 772 to run an operating system in the system and implement various functions of the operating system, or reads one or more application programs 771 to run an application in the system.

The memory 770 further stores other data 773 in addition to the computer program.

The AI processor 790 is mounted to the processor 750 as a coprocessor, and is configured to execute a task assigned by the processor 750 to the AI processor 790. In this embodiment, the AI processor 790 may be invoked by a scene identification model to implement some complex algorithms in scene identification. Specifically, an AI algorithm in the scene identification model is run on a plurality of cores of the processor 750. Then, the processor 750 invokes the AI processor 790, and a result implemented by the AI processor 790 is returned to the processor 750.

A connection relationship among the modules is only an example. A method provided in any embodiment of this application may also be applied to a terminal device in another connection manner, for example, all modules are connected by using a bus.

In this embodiment of this application, the processor 750 included in the terminal device further has the following functions:
obtaining to-be-processed data, where the to-be-processed data is generated by using data collected by a sensor, the sensor includes at least an infrared image sensor, and the to-be-processed data includes at least to-be-processed image data generated by using image data collected by the infrared image sensor;
determining, by using a scene identification model, a target scene corresponding to the to-be-processed data, where the scene identification model is obtained through training by using a sensor data set and a scene type set; and
determining a service processing manner based on the target scene.

The processor 750 is specifically configured to perform the following step:
determining, by using an AI algorithm in the scene identification model, the target scene corresponding to the to-be-processed data, where the AI algorithm includes a deep learning algorithm, and the AI algorithm is run on the AI processor 790.

The processor 750 is specifically configured to perform the following step:

The sensor further includes at least one of an audio collector and a first sub-sensor, the to-be-processed data includes at least one of to-be-processed audio data and first to-be-processed sub-data, the to-be-processed audio data is generated by using audio data collected by the audio collector, and the first to-be-processed sub-data is generated by using first sub-sensor data collected by the first sub-sensor.

The processor 750 is specifically configured to perform the following step:

The processor 750 further includes at least one of an image signal processor, an audio signal processor, and the first sub-sensor processor.

The image signal processor is configured to: when a preset running time of image collection arrives, obtain the image data by using the infrared image sensor, where the image data is data collected by the infrared image sensor; and
the AI processor 790 is specifically configured to obtain the to-be-processed image data by using the image signal processor, where the to-be-processed image data is generated by the image signal processor based on the image data; and/or
the audio signal processor is configured to: when a preset running time of audio collection arrives, obtain the audio data by using the audio collector; and
the AI processor 790 is specifically configured to obtain the to-be-processed audio data by using the audio signal processor, where the to-be-processed audio data is generated by the audio signal processor based on the audio data; and/or
the first sub-sensor processor is configured to: when a first preset running time arrives, obtain first sub-sensor data by using the first sub-sensor, where the first sub-sensor data is data collected by the first sub-sensor; and
the coprocessor is specifically configured to obtain the first to-be-processed sub-data by using the first sub-sensor processor, where the first to-be-processed sub-data is generated by the first sub-sensor processor based on the first sub-sensor data.

The processor 750 is specifically configured to perform the following step:
The coprocessor is specifically configured to: if the target scene is a two-dimensional code scanning scene, determine, based on the two-dimensional code scanning scene, that the service processing manner is to start a primary image sensor in the terminal device and/or start an application program that is in the terminal device and that supports a two-dimensional code scanning function.

The processor 750 is specifically configured to perform the following step:
The coprocessor is specifically configured to: if the target scene is a conference scene, determine, based on the conference scene, that the service processing manner is to enable a silent mode of the terminal device, and/or enable a silent function of an application program in the terminal device, and/or display a silent mode icon in an always on display area on a standby screen of the terminal device, where the silent mode icon is used to enable the silent mode.

The processor 750 is specifically configured to perform the following step:
The coprocessor is specifically configured to: if the target scene is a motion scene, determine, based on the motion scene, that the service processing manner is to enable a motion mode of the terminal device, and/or enable a motion mode function of an application program in the terminal device, and/or display a music play icon in an always on display area on a standby screen of the terminal device, where the motion mode of the terminal device includes a step counting function, and the music play icon is used to start or pause music play.

The processor 750 is specifically configured to perform the following step:
The coprocessor is specifically configured to: if the target scene is a driving scene, determine, based on the driving scene, that the service processing manner is to enable a driving mode of the terminal device, and/or enable a driving mode function of an application program in the terminal device, and/or display a driving mode icon in an always on display area on a standby screen of the terminal device, where the driving mode of the terminal device includes a navigation function and a voice assistant, and the driving mode icon is used to enable the driving mode.

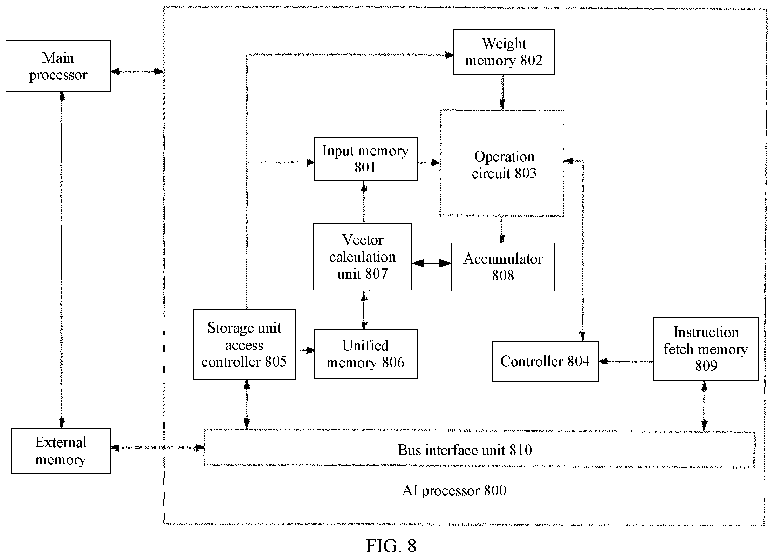

FIG 8 is a schematic structural diagram of an AI processor according to an embodiment of this application. The AI processor 800 is connected to a main processor and an external memory. A core part of the AI processor 800 is an operation circuit 803, and a controller 804 is used to control the operation circuit 803 to extract data from a memory and perform a mathematical operation.

In some implementations, the operation circuit 803 includes a plurality of processing engines (process engine, PE). In some implementations, the operation circuit 803 is a two-dimensional systolic array. Alternatively, the operation circuit 803 may be a one-dimensional systolic array or another electronic circuit that can perform a mathematical operation such as multiplication and addition. In some other implementations, the operation circuit 803 is a general-purpose matrix processor.

For example, it is assumed that there is an input matrix A, a weight matrix B, and an output matrix C. The operation circuit 803 obtains, from a weight memory 802, data corresponding to the matrix B, and buffers the data on each PE of the operation circuit 803. The operation circuit 803 obtains, from an input memory 801, data corresponding to the matrix A, performs a matrix operation on the data and the matrix B, and stores a partial result or a final result of a matrix into an accumulator (accumulator) 808.

A unified memory 806 is configured to store input data and output data. Weight data is directly migrated to the weight memory 802 by using a storage unit access controller 805 (such as a direct memory access controller, DMAC). The input data is also migrated to the unified memory 806 by using the storage unit access controller 805.

A bus interface unit (bus interface unit, BIU) 810 is used for interaction between an AXI (advanced extensible interface) bus and each of the storage unit access controller 805 and an instruction fetch memory (instruction fetch buffer) 809.

The bus interface unit 810 is used by the instruction fetch memory 809 to fetch an instruction from the external memory, and is further used by the storage unit access controller 805 to obtain original data of the input matrix A or the weight matrix B from the external memory.

The storage unit access controller 805 is mainly configured to: migrate the input data in the external memory to the unified memory 806, migrate the weight data to the weight memory 802, or migrate the input data to the input memory 801.

A vector calculation unit 807 usually includes a plurality of operation processing units. If required, further processing is performed on output of the operation circuit 803, such as vector multiplication, vector addition, an exponential operation, a logarithmic operation, and/or value comparison.

In some implementations, the vector calculation unit 807 can store a processed vector into the unified memory 806. For example, the vector calculation unit 807 may apply a nonlinear function to the output of the operation circuit 803, for example, a vector of accumulated values, to generate an activation value. In some implementations, the vector calculation unit 807 generates a normalized value, a combined value, or both of the two values. In some implementations, the processed vector can be used as activation input of the operation circuit 803.

The instruction fetch memory 809 connected to the controller 804 is configured to store an instruction used by the controller 804.

The unified memory 806, the input memory 801, the weight memory 802, and the instruction fetch memory 809 each are an on-chip memory. The external memory in the figure is independent of a hardware architecture of the AI processor.

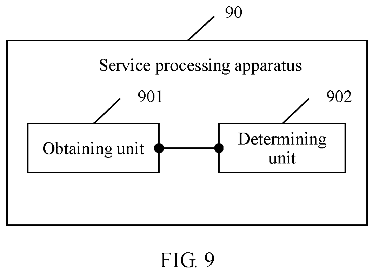

The following describes in detail a service processing apparatus corresponding to an embodiment in the embodiments of this application. FIG 9 is a schematic diagram of an embodiment of a service processing apparatus according to an embodiment of this application. The service processing apparatus 90 in this embodiment of this application includes:
an obtaining unit 901, configured to obtain to-be-processed data, where the to-be-processed data is generated by using data collected by a sensor, the sensor includes at least an infrared image sensor, and the to-be-processed data includes at least to-be-processed image data generated by using image data collected by the infrared image sensor; and
a determining unit 902, configured to determine, by using a scene identification model, a target scene corresponding to the to-be-processed data, where the scene identification model is obtained through training by using a sensor data set and a scene type set.

The determining unit 902 is further configured to determine a service processing manner based on the target scene.

In this embodiment, the obtaining unit 901 is configured to obtain the to-be-processed data, where the to-be-processed data is generated by using the data collected by the sensor, the sensor includes at least the infrared image sensor, and the to-be-processed data includes at least the to-be-processed image data generated by using the image data collected by the infrared image sensor. The determining unit 902 is configured to determine, by using the scene identification model, the target scene corresponding to the to-be-processed data, where the scene identification model is obtained through training by using the sensor data set and the scene type set. The determining unit 902 is further configured to determine the service processing manner based on the target scene.

In this embodiment of this application, a terminal device collects data by using a sensor that is deployed in the terminal device or is connected to the terminal device, where the sensor includes at least the infrared image sensor, and the terminal device generates the to-be-processed data based on the collected data, where the to-be-processed data includes at least the to-be-processed image data generated by using the image data collected by the infrared image sensor. After obtaining the to-be-processed data, the terminal device may determine, by using the scene identification model, the target scene corresponding to the to-be-processed data, where the scene identification model is obtained through offline training by using a data set obtained by the sensor through collection and a scene type set corresponding to different data, and offline training means performing model design and training by using a deep learning framework. After determining the current target scene, the terminal device may determine a corresponding service processing manner based on the target scene. The target scene in which the terminal device is currently located may be determined by using the data collected by the sensor and the scene identification model, and the corresponding service processing manner is determined based on the target scene, so that the terminal device can automatically determine the service processing manner corresponding to the target scene, without performing an additional operation, thereby improving use convenience of a user.

On the basis of the embodiment corresponding to FIG. 9, in another embodiment of the service processing apparatus 90 provided in this embodiment of this application,
the determining unit 902 is specifically configured to determine, by using an AI algorithm in the scene identification model, the target scene corresponding to the to-be-processed data, where the AI algorithm includes a deep learning algorithm, and the AI algorithm is run on an AI processor.

In this embodiment of this application, the terminal device specifically determines, by using the AI algorithm in the scene identification model, the target scene corresponding to to-be-processed data. The AI algorithm includes the deep learning algorithm, and is run on the AI processor in the terminal device. Because the AI processor has a strong parallel computing capability, and is characterized by high efficiency when the AI algorithm is run, the scene identification model determines a specific target scene by using the AI algorithm, where the AI algorithm is run on the AI processor in the terminal device, thereby improving efficiency of scene identification, and further improving use convenience of the user.

On the basis of the embodiment corresponding to FIG 9, in another embodiment of the service processing apparatus 90 provided in this embodiment of this application,
the sensor further includes at least one of an audio collector and a first sub-sensor, the to-be-processed data includes at least one of to-be-processed audio data and first to-be-processed sub-data, the to-be-processed audio data is generated by using audio data collected by the audio collector, and the first to-be-processed sub-data is generated by using first sub-sensor data collected by the first sub-sensor.

In this embodiment of this application, in addition to the infrared image sensor, the sensor deployed in the terminal device further includes one of the audio collector and the first sub-sensor. The first sub-sensor may be one or more of the following sensors: an acceleration sensor, a gyroscope, an ambient light sensor, a proximity sensor, and a geomagnetic sensor. The audio collector collects the audio data, and the audio data is processed by the terminal device to generate the to-be-processed audio data. The first sub-sensor collects the first sub-sensor data, and the first sub-sensor data is processed by the terminal device to generate to-be-processed first sub-sensor data. The terminal device collects data in a plurality of dimensions by using a plurality of sensors, thereby improving accuracy of scene identification.

On the basis of the embodiment corresponding to FIG 9, in another embodiment of the service processing apparatus 90 provided in this embodiment of this application,
the obtaining unit 901 is specifically configured to: when a preset running time of image collection arrives, obtain, by the obtaining unit 901, the image data by using the infrared image sensor, where the image data is data collected by the infrared image sensor; and
the obtaining unit 901 is specifically configured to obtain the to-be-processed image data by using an image signal processor, where the to-be-processed image data is generated by the image signal processor based on the image data; and/or
the obtaining unit 901 is specifically configured to: when a preset running time of audio collection arrives, obtain, by the obtaining unit 901, the audio data by using the audio collector; and
the obtaining unit 901 is specifically configured to obtain the to-be-processed audio data by using an audio signal processor, where the to-be-processed audio data is generated by the audio signal processor based on the audio data; and/or
the obtaining unit 901 is specifically configured to: when a first preset running time arrives, obtain, by the obtaining unit 901, the first sub-sensor data by using the first sub-sensor, where the first sub-sensor data is data collected by the first sub-sensor; and
the obtaining unit 901 is specifically configured to obtain the first to-be-processed sub-data by using a first sub-sensor processor, where the first to-be-processed sub-data is generated by the first sub-sensor processor based on the first sub-sensor data.

In this embodiment of this application, one or more of the infrared image sensor, the audio collector, and the first sub-sensor may separately collect data, corresponding to the sensor, after their respective preset running times arrive. After original sensor data is collected, the terminal device processes the original sensor data by using a processor corresponding to the sensor, to generate to-be-processed sensor data. The preset running time is set, and the sensor is started to collect data through timing, so that the collected original data can be processed by the processor corresponding to the sensor, thereby reducing buffer space occupied by the scene identification model, reducing power consumption of the scene identification model, and improving use duration of the terminal device in a standby mode.

On the basis of the embodiment corresponding to FIG 9, in another embodiment of the service processing apparatus 90 provided in this embodiment of this application,
the determining unit 902 is specifically configured to: if the determining unit 902 determines that the target scene is a two-dimensional code scanning scene, determine, by the determining unit 902 based on the two-dimensional code scanning scene, that the service processing manner is to start a primary image sensor in the terminal device and/or start an application program that is in the terminal device and that supports a two-dimensional code scanning function.

In this embodiment of this application, when determining, based on the data collected by the one or more sensors in the terminal device, that the target scene corresponding to the data collected by the sensors is the two-dimensional code scanning scene, the terminal device determines a service processing manner corresponding to the two-dimensional code scanning scene. The service processing manner includes starting the primary image sensor in the terminal device. The terminal device may scan a two-dimensional code by using the primary image sensor. Alternatively, the terminal device may start the application program that supports the two-dimensional code scanning function, for example, start an application program WeChat and enable a two-dimensional code scanning function in WeChat. The primary image sensor and the application program that supports the two-dimensional code scanning function may be both started, or the primary image sensor or the application program that supports the two-dimensional code scanning function may be started based on a preset instruction or an instruction received from the user. This is not limited herein. In addition to scanning the two-dimensional code, the primary image sensor may be further used to scan another icon such as a bar code. This is not limited herein. After determining, by using the scene identification model and the data collected by the multidimensional sensor, that the target scene is the two-dimensional code scanning scene, the terminal device may automatically execute a related service processing manner, thereby improving intelligence of the terminal device and operation convenience of the user.

On the basis of the embodiment corresponding to FIG 9, in another embodiment of the service processing apparatus 90 provided in this embodiment of this application,
the determining unit 902 is specifically configured to: if the determining unit 902 determines that the target scene is a conference scene, determine, by the determining unit 902 based on the conference scene, that the service processing manner is to enable a silent mode of the terminal device, and/or enable a silent function of an application program in the terminal device, and/or display a silent mode icon in an always on display area on a standby screen of the terminal device, where the silent mode icon is used to enable the silent mode.

In this embodiment of this application, when determining, based on the data collected by the one or more sensors in the terminal device, that the target scene corresponding to the data collected by the sensors is the conference scene, the terminal device determines a service processing manner corresponding to the conference scene. The service processing manner includes enabling the silent mode of the terminal device. When the terminal device is in the silent mode, all application programs running on the terminal device are in a silent state. Alternatively, the terminal device may enable the silent function of the application program running on the terminal device, for example, enable a silent function of an application program WeChat. In this case, alert sound of WeChat is switched to the silent mode. Alternatively, the terminal device may display the silent mode icon in the always on display area on the standby screen of the terminal device. The terminal device may receive a silent operation instruction of the user by using the silent mode icon, and the terminal device enables the silent mode in response to the silent operation instruction. After determining, by using the scene identification model and the data collected by the multidimensional sensor, that the target scene is the conference scene, the terminal device may automatically execute a related service processing manner, thereby improving intelligence of the terminal device and operation convenience of the user.

On the basis of the embodiment corresponding to FIG 9, in another embodiment of the service processing apparatus 90 provided in this embodiment of this application,
the determining unit 902 is specifically configured to: if the determining unit 902 determines that the target scene is a motion scene, determine, by the determining unit 902 based on the motion scene, that the service processing manner is to enable a motion mode of the terminal device, and/or enable a motion mode function of an application program in the terminal device, and/or display a music play icon in an always on display area on a standby screen of the terminal device, where the motion mode of the terminal device includes a step counting function, and the music play icon is used to start or pause music play.

In this embodiment of this application, when determining, based on the data collected by the one or more sensors in the terminal device, that the target scene corresponding to the data collected by the sensors is the motion scene, the terminal device determines a service processing manner corresponding to the motion scene. The service processing manner includes enabling the motion mode of the terminal device. When the terminal device is in the motion mode, the terminal device starts a step counting application program and a physiological data monitoring application program, and records a quantity of steps and related physiological data of the user by using a related sensor in the terminal device. Alternatively, the terminal device may enable the motion mode function of the application program in the terminal device, for example, enable a motion function of an application program NetEase Cloud Music. In this case, a play mode of NetEase Cloud Music is the motion mode. Alternatively, the terminal device may display the music play icon in the always on display area on the standby screen of the terminal device. The terminal device may receive a music play instruction of the user by using the music play icon, and the terminal device starts or pauses music play in response to the music play instruction. After determining, by using the scene identification model and the data collected by the multidimensional sensor, that the target scene is the motion scene, the terminal device may automatically execute a related service processing manner, thereby improving intelligence of the terminal device and operation convenience of the user.

On the basis of the embodiment corresponding to FIG 9, in another embodiment of the service processing apparatus 90 provided in this embodiment of this application,
the determining unit 902 is specifically configured to: if the determining unit 902 determines that the target scene is a driving scene, determine, by the determining unit 902 based on the driving scene, that the service processing manner is to enable a driving mode of the terminal device, and/or enable a driving mode function of an application program in the terminal device, and/or display a driving mode icon in an always on display area on a standby screen of the terminal device, where the driving mode of the terminal device includes a navigation function and a voice assistant, and the driving mode icon is used to enable the driving mode.

In this embodiment of this application, when determining, based on the data collected by the one or more sensors in the terminal device, that the target scene corresponding to the data collected by the sensors is the driving scene, the terminal device determines a service processing manner corresponding to the driving scene. The service processing manner includes enabling the driving mode of the terminal device. When the terminal device is in the driving mode, the terminal device starts the voice assistant, where the terminal device may perform a related operation based on a voice instruction entered by the user, and the terminal device may further enable the navigation function. Alternatively, the terminal device may enable the driving mode function of the application program in the terminal device, for example, enable a driving mode function of an application program Amap. In this case, a navigation mode of NetEase Cloud Music is the driving mode. Alternatively, the terminal device may display the driving mode icon in the always on display area on the standby screen of the terminal device. The terminal device may receive a driving mode instruction of the user by using the driving mode icon, and the terminal device enables the driving mode in response to the driving mode instruction. After determining, by using the scene identification model and the data collected by the multidimensional sensor, that the target scene is the driving scene, the terminal device may automatically execute a related service processing manner, thereby improving intelligence of the terminal device and operation convenience of the user.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer readable storage medium. Based on such an understanding, the technical solutions in this application essentially, or the part contributing to the prior art, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions in this application, and are not intended to limit this application.

## Claims

1. A service processing method, wherein the method is applied to a terminal device comprising a plurality of sensors including an infrared image sensor disposed in an always on area inside the terminal device and a primary image sensor and a processor that comprises a coprocessor and an AI processor, and the method comprises:
obtaining (302) to-be-processed data while the terminal device is in a screen-off state, wherein the to-be-processed data is generated by using a plurality of types of sensor data collected by the plurality of sensors that is deployed in the terminal device or is connected to the terminal device, , and the to-be-processed data comprises to-be-processed image data generated by using image data collected by the infrared image sensor;
determining (304), by using a scene identification model, a target scene, in which the terminal device is currently located, corresponding to the to-be-processed data while the terminal device is in the screen-off state, wherein the scene identification model is obtained through training by using a sensor data set and a scene type set; and
determining (305) a service processing manner based on the target scene while the terminal device is in the screen-off state, wherein the service processing manner comprises starting a target application program corresponding to the target scene, and/or recommending a target service corresponding to the target scene;
wherein the determining, by using a scene identification model, a target scene corresponding to the to-be-processed data comprises:
determining, by using an AI algorithm in the scene identification model, the target scene corresponding to the to-be-processed data, wherein the AI algorithm comprises a deep learning algorithm, and the AI algorithm is run on the AI processor that is disposed in the always on area inside the terminal device, wherein the plurality of sensors is disposed in the always on area inside the terminal device; and
wherein the determining the service processing manner based on the target scene comprises:
if the target scene is a two-dimensional code scanning scene, determining, based on the two-dimensional code scanning scene, that the service processing manner is to start the primary image sensor in the terminal device to perform a two-dimensional code scanning function.

2. The method according to claim 1, wherein
the plurality of sensors further comprises at least one of an audio collector and a first sub-sensor, the to-be-processed data comprises at least one of to-be-processed audio data and first to-be-processed sub-data, the to-be-processed audio data is generated by using audio data collected by the audio collector, and the first to-be-processed sub-data is generated by using first sub-sensor data collected by the first sub-sensor.

3. The method according to claim 2, wherein the obtaining the to-be-processed data comprises:
when a preset running time of image collection arrives, obtaining the image data by using the infrared image sensor, wherein the image data is data collected by the infrared image sensor; and
obtaining the to-be-processed image data by using an image signal processor, wherein the to-be-processed image data is generated by the image signal processor based on the image data; and/or
when a preset running time of audio collection arrives, obtaining the audio data by using the audio collector; and
obtaining the to-be-processed audio data by using an audio signal processor, wherein the to-be-processed audio data is generated by the audio signal processor based on the audio data; and/or
when a first preset running time arrives, obtaining the first sub-sensor data by using the first sub-sensor, wherein the first sub-sensor data is data collected by the first sub-sensor; and
obtaining the first to-be-processed sub-data by using a first sub-sensor processor, wherein the first to-be-processed sub-data is generated by the first sub-sensor processor based on the first sub-sensor data.

4. A terminal device, comprising a plurality of sensors (720) and a processor (750), wherein the plurality of sensors comprises an infrared image sensor disposed in an always on area inside the terminal device and a primary image sensor;
the processor is configured to obtain to-be-processed data while the terminal device is in a screen-off state, wherein the to-be-processed data is generated by using a plurality of types of sensor data collected by the plurality of sensors, and the to-be-processed data comprises at least to-be-processed image data generated by using image data collected by the infrared image sensor;
the processor is further configured to determine, by using a scene identification model, a target scene, in which the terminal device is currently located, corresponding to the to-be-processed data while the terminal device is in the screen-off state,, wherein the scene identification model is obtained through training by using a sensor data set obtained by the plurality of sensors and a scene type set; and
the processor is further configured to determine a service processing manner based on the target scene while the terminal device is in a screen-off state, wherein the service processing manner comprises starting a target application program corresponding to the target scene, and/or recommending a target service corresponding to the target scene;
wherein the processor further comprises a coprocessor and an AI processor (790); and
the processor is specifically configured to determine, by using an AI algorithm in the scene identification model, the target scene corresponding to the to-be-processed data, wherein the AI algorithm comprises a deep learning algorithm, and the AI algorithm is run on the AI processor that is disposed in the always on area inside the terminal device; and
wherein the coprocessor is specifically configured to: if the target scene is a two-dimensional code scanning scene, determine, based on the two-dimensional code scanning scene, that the service processing manner is to start the primary image sensor in the terminal device to perform a two-dimensional code scanning function.

5. The terminal device according to claim 4, wherein the plurality of sensors further comprises at least one of an audio collector and a first sub-sensor.

6. The terminal device according to claim 5, wherein the processor further comprises at least one of an image signal processor, an audio signal processor, and the first sub-sensor processor, wherein
the image signal processor is configured to: when a preset running time of image collection arrives, obtain the image data by using the infrared image sensor, wherein the image data is data collected by the infrared image sensor; and
the AI processor is specifically configured to obtain the to-be-processed image data by using the image signal processor, wherein the to-be-processed image data is generated by the image signal processor based on the image data; and/or
the audio signal processor is configured to: when a preset running time of audio collection arrives, obtain the audio data by using the audio collector; and
the AI processor is specifically configured to obtain the to-be-processed audio data by using the audio signal processor, wherein the to-be-processed audio data is generated by the audio signal processor based on the audio data; and/or
the first sub-sensor processor is configured to: when a first preset running time arrives, obtain first sub-sensor data by using the first sub-sensor, wherein the first sub-sensor data is data collected by the first sub-sensor; and
the coprocessor is specifically configured to obtain the first to-be-processed sub-data by using the first sub-sensor processor, wherein the first to-be-processed sub-data is generated by the first sub-sensor processor based on the first sub-sensor data.

## Patentansprüche

1. Dienstverarbeitungsverfahren, wobei das Verfahren auf eine Endgerätevorrichtung angewendet wird, die eine Vielzahl von Sensoren einschließlich eines Infrarotbildsensors, der in einem "Always-On"-Bereich innerhalb der Endgerätevorrichtung angeordnet ist, und eines primären Bildsensors sowie einen Prozessor umfasst, der einen Coprozessor und einen KI-Prozessor umfasst, und wobei das Verfahren umfasst:
Erhalten (302) von zu verarbeitenden Daten, während sich die Endgerätevorrichtung in einem Zustand mit abgeschaltetem Bildschirm befindet, wobei die zu verarbeitenden Daten unter Verwendung einer Vielzahl von Typen von Sensordaten generiert werden, die durch die Vielzahl von Sensoren gesammelt werden, die in der Endgerätevorrichtung installiert sind oder mit der Endgerätevorrichtung verbunden sind, und wobei die zu verarbeitenden Daten zu verarbeitende Bilddaten umfassen, die unter Verwendung von Bilddaten generiert wurden, die durch den Infrarotbildsensor gesammelt wurden;
Bestimmen (304) einer Zielszene, in der sich die Endgerätevorrichtung derzeit befindet, entsprechend den zu verarbeitenden Daten, während sich die Endgerätevorrichtung in dem Zustand mit abgeschaltetem Bildschirm befindet, unter Verwendung eines Szeneidentifikationsmodells, wobei das Szeneidentifikationsmodell durch Training erhalten wird, indem ein Sensordatensatz und ein Szenetypsatz verwendet werden; und
Bestimmen (305) einer Dienstverarbeitungsweise basierend auf der Zielszene, während sich die Endgerätevorrichtung in dem Zustand mit abgeschaltetem Bildschirm befindet, wobei die Dienstverarbeitungsweise Starten eines Zielapplikationsprogramms, welches der Zielszene entspricht, und/oder Empfehlen eines Zieldienstes, welcher der Zielszene entspricht, umfasst;
wobei das Bestimmen einer Zielszene, welche den zu verarbeitenden Daten entspricht, unter Verwendung eines Szeneidentifikationsmodells umfasst:
Bestimmen der Zielszene entsprechend den zu verarbeitenden Daten unter Verwendung eines KI-Algorithmus in dem Szeneidentifikationsmodell, wobei der KI-Algorithmus einen "Deep-Learning"-Algorithmus umfasst, und der KI-Algorithmus auf dem KI-Prozessor ausgeführt wird, der in dem "Always-On"-Bereich innerhalb der Endgerätevorrichtung angeordnet ist, wobei die Vielzahl von Sensoren in dem "Always-on"-Bereich innerhalb der Endgerätevorrichtung angeordnet ist; und
wobei das Bestimmen der Dienstverarbeitungsweise basierend auf der Zielszene umfasst:
falls die Zielszene eine zweidimensionale Codescanszene ist, Bestimmen basierend auf der zweidimensionalen Codescanszene, dass die Dienstverarbeitungsweise Starten des primären Bildsensors in der Endgerätevorrichtung ist, um eine zweidimensionale Codescanfunktion durchzuführen.

2. Verfahren gemäß Anspruch 1, wobei
die Vielzahl von Sensoren des Weiteren mindestens einen von einem Audiokollektor und einem ersten Subsensor umfasst, die zu verarbeitenden Daten mindestens eines von zu verarbeitenden Audiodaten und ersten zu verarbeitenden Subdaten umfasst, die zu verarbeitenden Audiodaten unter Verwendung von Audiodaten generiert werden, die durch den Audiokollektor gesammelt wurden, und die ersten zu verarbeitenden Subdaten unter Verwendung von ersten Subsensordaten generiert werden, die durch den ersten Subsensor gesammelt wurden.

3. Verfahren gemäß Anspruch 2, wobei das Erhalten der zu verarbeitenden Daten umfasst:
wenn eine vorgegebene Laufzeit von Bildkollektion ankommt, Erhalten der Bilddaten unter Verwendung des Infrarotbildsensors, wobei die Bilddaten Daten sind, die durch den Infrarotbildsensor gesammelt werden; und
Erhalten der zu verarbeitenden Bilddaten unter Verwendung eines Bildsignalprozessors, wobei die zu verarbeitenden Bilddaten durch den Bildsignalprozessor basierend auf den Bilddaten generiert werden; und/oder
wenn eine vorgegebene Laufzeit von Audiokollektion ankommt, Erhalten der Audiodaten unter Verwendung des Audiokollektors; und
Erhalten der zu verarbeitenden Audiodaten unter Verwendung eines Audiosignalprozessors, wobei die zu verarbeitenden Audiodaten durch den Audiosignalprozessor basierend auf den Audiodaten generiert werden; und/oder
wenn eine erste vorgegebene Laufzeit ankommt, Erhalten der ersten Subsensordaten unter Verwendung des ersten Subsensors, wobei die ersten Subsensordaten Daten sind, die durch den ersten Subsensor gesammelt werden, und
Erhalten der ersten zu verarbeitenden Subdaten unter Verwendung eines ersten Subsensorprozessors, wobei die ersten zu verarbeitenden Subdaten durch den ersten Subsensorprozessor basierend auf den ersten Subsensordaten generiert werden.

4. Endgerätevorrichtung, umfassend eine Vielzahl von Sensoren (720) und einen Prozessor (750), wobei die Vielzahl von Sensoren einen Infrarotbildsensor, der in einem "Always-On"-Bereich innerhalb der Endgerätevorrichtung angeordnet ist, und einen primären Bildsensor umfasst;
der Prozessor konfiguriert ist zum Erhalten von zu verarbeitenden Daten, während sich die Endgerätevorrichtung in einem Zustand mit abgeschaltetem Bildschirm befindet, wobei die zu verarbeitenden Daten unter Verwendung einer Vielzahl von Typen von Sensordaten generiert werden, die durch die Vielzahl von Sensoren gesammelt werden, und wobei die zu verarbeitenden Daten mindestens zu verarbeitende Bilddaten umfassen, die unter Verwendung von Bilddaten generiert wurden, die durch den Infrarotbildsensor gesammelt wurden;
der Prozessor des Weiteren konfiguriert ist zum Bestimmen einer Zielszene, in der sich die Endgerätevorrichtung derzeit befindet, entsprechend den zu verarbeitenden Daten, während sich die Endgerätevorrichtung in dem Zustand mit abgeschaltetem Bildschirm befindet, unter Verwendung eines Szeneidentifikationsmodells, wobei das Szeneidentifikationsmodell durch Training erhalten wird, indem ein Sensordatensatz, der durch die Vielzahl von Sensoren erhalten wird, und ein Szenetypsatz verwendet werden; und
der Prozessor des Weiteren konfiguriert ist zum Bestimmen einer Dienstverarbeitungsweise basierend auf der Zielszene, während sich die Endgerätevorrichtung in dem Zustand mit abgeschaltetem Bildschirm befindet, wobei die Dienstverarbeitungsweise Starten eines Zielapplikationsprogramms, welches der Zielszene entspricht, und/oder Empfehlen eines Zieldienstes, welcher der Zielszene entspricht, umfasst;
wobei der Prozessor des Weiteren einen Coprozessor und einen KI-Prozessor (790) umfasst; und
der Prozessor spezifisch konfiguriert ist zum Bestimmen der Zielszene entsprechend den zu verarbeitenden Daten unter Verwendung eines KI-Algorithmus in dem Szeneidentifikationsmodell, wobei der KI-Algorithmus einen "Deep-Learning"-Algorithmus umfasst, und der KI-Algorithmus auf dem KI-Prozessor ausgeführt wird, der in dem "Always-On"-Bereich innerhalb der Endgerätevorrichtung angeordnet ist; und
wobei der Coprozessor spezifisch konfiguriert ist, um, falls die Zielszene eine zweidimensionale Codescanszene ist, basierend auf der zweidimensionalen Codescanszene zu bestimmen, dass die Dienstverarbeitungsweise Starten des primären Bildsensors in der Endgerätevorrichtung ist, um eine zweidimensionale Codescanfunktion durchzuführen.

5. Endgerätevorrichtung gemäß Anspruch 4, wobei die Vielzahl von Sensoren des Weiteren mindestens einen von einem Audiokollektor und einem Subsensor umfasst.

6. Endgerätevorrichtung gemäß Anspruch 5, wobei der Prozessor des Weiteren mindestens einen von einem Bildsignalprozessor, einem Audiosignalprozessor und dem ersten Subsensorprozessor umfasst, wobei
der Bildsignalprozessor konfiguriert ist, um, wenn eine vorgegebene Laufzeit von Bildkollektion ankommt, die Bilddaten unter Verwendung des Infrarotbildsensors zu erhalten, wobei die Bilddaten Daten sind, die durch den Infrarotbildsensor gesammelt werden; und
der KI-Prozessor spezifisch konfiguriert ist, um die zu verarbeitenden Bilddaten unter Verwendung eines Bildsignalprozessors zu erhalten, wobei die zu verarbeitenden Bilddaten durch den Bildsignalprozessor basierend auf den Bilddaten generiert werden; und/oder
der Audiosignalprozessor konfiguriert ist, um, wenn eine vorgegebene Laufzeit von Audiokollektion ankommt, die Audiodaten unter Verwendung des Audiokollektors zu erhalten; und
der KI-Prozessor spezifisch konfiguriert ist, um die zu verarbeitenden Audiodaten unter Verwendung eines Audiosignalprozessors zu erhalten, wobei die zu verarbeitenden Audiodaten durch den Audiosignalprozessor basierend auf den Audiodaten generiert werden; und/oder
der erste Subsensorprozessor konfiguriert ist, um, wenn eine erste vorgegebene Laufzeit ankommt, erste Subsensordaten unter Verwendung des ersten Subsensors zu erhalten, wobei die ersten Subsensordaten Daten sind, die durch den ersten Subsensor gesammelt wurden; und
der Coprozessor spezifisch konfiguriert ist, um die ersten zu verarbeitenden Subdaten unter Verwendung des ersten Subsensorprozessors zu erhalten, wobei die ersten zu verarbeitenden Subdaten durch den ersten Subsensorprozessor basierend auf den ersten Subsensordaten generiert werden.

## Revendications

1. Procédé de traitement de service, dans lequel le procédé est appliqué à un dispositif terminal comprenant une pluralité de capteurs comportant un capteur d'image infrarouge disposé dans une zone toujours active à l'intérieur du dispositif terminal et un capteur d'image primaire, et un processeur qui comprend un coprocesseur et un processeur IA, et le procédé comprend :
l'obtention (302) de données à traiter lorsque le dispositif terminal est dans un état écran éteint, dans lequel les données à traiter sont générées à l'aide d'une pluralité de types de données de capteurs collectées par la pluralité de capteurs qui est déployée dans le dispositif terminal ou est connectée au dispositif terminal, et les données à traiter comprennent des données d'image à traiter générées à l'aide de données d'image collectées par le capteur d'image infrarouge ;
la détermination (304), à l'aide d'un modèle d'identification de scène, d'une scène cible dans laquelle se trouve actuellement le dispositif terminal et qui correspond aux données à traiter lorsque le dispositif terminal est dans l'état écran éteint, dans lequel le modèle d'identification de scène est obtenu par apprentissage à l'aide d'un ensemble de données de capteurs et d'un ensemble de types de scènes ; et
la détermination (305) d'un mode de traitement de service sur la base de la scène cible lorsque le dispositif terminal est dans l'état écran éteint, dans lequel le mode de traitement de service comprend le démarrage d'un programme d'application cible correspondant à la scène cible, et/ou la recommandation d'un service cible correspondant à la scène cible ;
dans lequel la détermination, à l'aide d'un modèle d'identification de scène, d'une scène cible correspondant aux données à traiter comprend :
la détermination, à l'aide d'un algorithme IA dans le modèle d'identification de scène, de la scène cible correspondant aux données à traiter, dans lequel l'algorithme IA comprend un algorithme d'apprentissage profond, et l'algorithme IA est exécuté sur le processeur IA qui est disposé dans la zone toujours active à l'intérieur du dispositif terminal, dans lequel la pluralité de capteurs est disposée dans la zone toujours active à l'intérieur du dispositif terminal ; et
dans lequel la détermination du mode de traitement de service sur la base de la scène cible comprend :
si la scène cible est une scène de lecture de code bidimensionnel, la détermination, sur la base de la scène de lecture de code bidimensionnel, que le mode de traitement de service doit démarrer le capteur d'image primaire dans le dispositif terminal pour effectuer une fonction de lecture de code bidimensionnel.

2. Procédé selon la revendication 1, dans lequel
la pluralité de capteurs comprend en outre au moins l'un parmi un collecteur audio et un premier sous-capteur, les données à traiter comprennent au moins l'une parmi des données audio à traiter et des premières sous-données à traiter, les données audio à traiter sont générées à l'aide de données audio collectées par le collecteur audio, et les premières sous-données à traiter sont générées à l'aide de données de premier sous-capteur collectées par le premier sous-capteur.

3. Procédé selon la revendication 2, dans lequel l'obtention des données à traiter comprend :
lorsqu'un temps de fonctionnement prédéfini de collecte d'images arrive, l'obtention des données d'image à l'aide du capteur d'image infrarouge, dans lequel les données d'image sont des données collectées par le capteur d'image infrarouge ; et
l'obtention des données d'image à traiter à l'aide d'un processeur de signal d'image, dans lequel les données d'image à traiter sont générées par le processeur de signal d'image sur la base des données d'image ; et/ou
lorsqu'un temps de fonctionnement prédéfini de collecte audio arrive, l'obtention des données audio à l'aide du collecteur audio ; et
l'obtention des données audio à traiter à l'aide d'un processeur de signal audio, dans lequel les données audio à traiter sont générées par le processeur de signal audio sur la base des données audio ; et/ou
lorsqu'un premier temps de fonctionnement prédéfini arrive, l'obtention des données de premier sous-capteur à l'aide du premier sous-capteur, dans lequel les données de premier sous-capteur sont des données collectées par le premier sous-capteur ; et
l'obtention des premières sous-données à traiter à l'aide d'un processeur de premier sous-capteur, dans lequel les premières sous-données à traiter sont générées par le processeur de premier sous-capteur sur la base des données de premier sous-capteur.

4. Dispositif terminal, comprenant une pluralité de capteurs (720) et un processeur (750), dans lequel la pluralité de capteurs comprend un capteur d'image infrarouge disposé dans une zone toujours active à l'intérieur du dispositif terminal et un capteur d'image primaire ;
le processeur est configuré pour obtenir des données à traiter lorsque le dispositif terminal est dans un état écran éteint, dans lequel les données à traiter sont générées à l'aide d'une pluralité de types de données de capteurs collectées par la pluralité de capteurs, et les données à traiter comprennent au moins des données d'image à traiter générées à l'aide de données d'image collectées par le capteur d'image infrarouge ;
le processeur est également configuré pour déterminer, à l'aide d'un modèle d'identification de scène, une scène cible dans laquelle se trouve actuellement le dispositif terminal et qui correspond aux données à traiter lorsque le dispositif terminal est dans l'état écran éteint, dans lequel le modèle d'identification de scène est obtenu par apprentissage à l'aide d'un ensemble de données de capteurs obtenues par la pluralité de capteurs et d'un ensemble de types de scènes ; et
le processeur est également configuré pour déterminer un mode de traitement de service sur la base de la scène cible lorsque le dispositif terminal est dans un état écran éteint, dans lequel le mode de traitement de service comprend le démarrage d'un programme d'application cible correspondant à la scène cible, et/ou la recommandation d'un service cible correspondant à la scène cible ;
dans lequel le processeur comprend en outre un coprocesseur et un processeur IA (790) ; et
le processeur est spécifiquement configuré pour déterminer, à l'aide d'un algorithme IA dans le modèle d'identification de scène, la scène cible correspondant aux données à traiter, dans lequel l'algorithme IA comprend un algorithme d'apprentissage profond, et l'algorithme IA est exécuté sur le processeur IA qui est disposé dans la zone toujours active à l'intérieur du dispositif terminal ; et
dans lequel le coprocesseur est spécifiquement configuré pour : si la scène cible est une scène de lecture de code bidimensionnel, déterminer, sur la base de la scène de lecture de code bidimensionnel, que le mode de traitement de service doit démarrer le capteur d'image primaire dans le dispositif terminal pour effectuer une fonction de lecture de code bidimensionnel.

5. Dispositif terminal selon la revendication 4, dans lequel la pluralité de capteurs comprend en outre au moins l'un parmi un collecteur audio et un premier sous-capteur.

6. Dispositif terminal selon la revendication 5, dans lequel le processeur comprend en outre au moins l'un parmi un processeur de signal d'image, un processeur de signal audio, et le processeur de premier sous-capteur, dans lequel
le processeur de signal d'image est configuré pour : lorsqu'un temps de fonctionnement prédéfini de collecte d'images arrive, obtenir les données d'image à l'aide du capteur d'image infrarouge, dans lequel les données d'image sont des données collectées par le capteur d'image infrarouge ; et
le processeur IA est spécifiquement configuré pour obtenir les données d'image à traiter à l'aide du processeur de signal d'image, dans lequel les données d'image à traiter sont générées par le processeur de signal d'image sur la base des données d'image ; et/ou
le processeur de signal audio est configuré pour : lorsqu'un temps de fonctionnement prédéfini de collecte audio arrive, obtenir les données audio à l'aide du collecteur audio ; et
le processeur IA est spécifiquement configuré pour obtenir les données audio à traiter à l'aide du processeur de signal audio, dans lequel les données audio à traiter sont générées par le processeur de signal audio sur la base des données audio ; et/ou le processeur de premier sous-capteur est configuré pour : lorsqu'un premier temps de fonctionnement prédéfini arrive, obtenir des données de premier sous-capteur à l'aide du premier sous-capteur, dans lequel les données de premier sous-capteur sont des données collectées par le premier sous-capteur ; et
le coprocesseur est spécifiquement configuré pour obtenir les premières sous-données à traiter à l'aide du processeur de premier sous-capteur, dans lequel les premières sous-données à traiter sont générées par le processeur de premier sous-capteur sur la base des données de premier sous-capteur.
